# EUROPEAN PATENT SPECIFICATION

(11) **EP 1 485 417 B1**
(45) Date of publication and mention of the grant of the patent: **02.08.2006**
(21) Application number: 03722341.9
(22) Date of filing: 12.03.2003
(51) Int. Cl.: C08F 255/00, C08F 287/00, C08F 8/46

(54) **PROCESS FOR THE FUNCTIONALIZATION OF POLYOLEFINS**
VERFAHREN ZUR FUNKTIONALISIERUNG VON POLYOLEFINEN
PROCEDE POUR LA FONCTIONNALISATION DES POLYOLEFINES

(30) Priority: 20.03.2002 IT MI20020583
(43) Date of publication of application: 15.12.2004
(73) Proprietor: Polimeri Europa S.p.A., 72100 Brindisi (IT)
(72) Inventor: TANAGLIA, Tiziano, I- 40141 Bologna (IT); BIGGI, Aroldo, deceased (IT); MASI, Francesco, I-26866 Sant'Angelo Lodigiano-Lodi (IT)
(74) Representative: De Gregori, Antonella
(86) International application number: PCT/EP2003/002636
(87) International publication number: WO 2003/078487

(56) References cited:
- EP-A- 0 392 783
- WO-A-98/25979
- FR-A- 1 466 197
- FR-A- 1 494 634
- GB-A- 1 168 959
- GB-A- 1 217 231
- US-A- 3 166 607
- US-A- 6 107 405

## Description

The present invention relates to a process for the functionalization of polyolefins by treatment, under shear conditions, of said polyolefins with an unsaturated monomer containing polar groups in the presence of at least one hydroperoxide as radicalic initiator.

Polyolefins are non-polar products which have a poor affinity with traditional materials such as for example, glass and metals in general, and are incompatible with polar synthetic polymers such as polyesters and polyamides. Furthermore, polyolefins have a limited adhesion strength to these materials.

The preparation of composite or laminated materials starting from polyolefins as such and from the above traditional materials, consequently creates considerable difficulties.

These difficulties have given rise, in relatively recent times, to intense research activities aimed at obtaining polyolefins with improved surface properties.

Reactions relating to the functionalization of polyolefins by the grafting of polar monomers using radicalic reactions promoted by peroxides, have been described in literature.

For example patent U.S. 4,147,746 describes the modification reaction of polyethylene with derivatives of maleic, itaconic and citraconic acid in the presence of peroxides.

When the modification reaction of polyolefins, however, must ensure that the physico-chemical and rheological characteristics of the starting polyolefin are kept as unvaried as possible, the use of peroxides as radicalic initiators can be unsatisfactory.

It is known in fact that peroxides favour the cross-linking of polyolefins, in particular EPDM, in competition with the grafting reaction and produce undesired increases in the molecular weight and a broadening of the molecular weight distribution.

Reactions relating to the functionalization of polyolefins in which hydroperoxide is indicated among the possible initiators, have been described in literature (JP-55016022, GB-1168959).

Under the conditions in which the functionalization takes place in the above patents, however, low shear and a temperature higher than the decomposition value, the hydroperoxide behaves in exactly the same way as any radicalic initiator.

It has now been found that by using hydroperoxides under shear conditions in the grafting reaction of polyolefins with an unsaturated monomer, it is possible to obtain functionalized polyolefins effectively reducing the cross-linking phenomena of the substrate. There are consequently no uncontrolled increases in the molecular weight or the formation of microgels and branchings which can influence the processability of the end-product.

In accordance with this, the present invention relates to a process for the functionalization of polyolefins selected from:
- ethylene/propylene copolymers (EPM) with a molar propylene content ranging from 16% to 50%, and an Mw ranging from 10,000 to 200,000;
- ethylene/propylene/non-conjugated diolefin (EPDM) terpolymers with a molar ethylene content ranging from 40 to 85%, from 15 to 70% of propylene and 2 to 10% molar of non-conjugated diene, the molecular weights Mw of the EPDM being within the range from 75,000 to 450,000;
which comprise the treatment under shear conditions higher than 100 sec⁻¹, with a polar unsaturated monomer selected from maleic anhydride and its derivatives, in the presence of at least one hydroperoxide as radicalic initiator, the concentration of hydroperoxide with respect to the polyolefins ranging from 0.1 to 20% by weight.

Preferably ethylene/propylene copolymers (EPM) have a molar propylene content ranging from 20% to 45%.

Typical examples of non-conjugated diolefins are 1,4-hexadiene, 1,5-heptadiene, 1,6-octadiene, 1,4-cyclohexadiene, 5-methylene-2-norbornene, 5-ethylidene-2-norbornene. These EPDM have a molar ethylene content ranging from 40 to 85%, preferably from 40 to 70%; from 15 to 70%, preferably from 30 to 60% molar, of propylene; from 2 to 10% molar of non-conjugated diene.

The molecular weights Mw of the EPDM are within the range of 75,000 to 450,000, preferably from 100,000 to 180,000 and the non-conjugated diene is preferably 5-ethylidene-2-norbornene;
- thermoplastic elastomers deriving from butadiene and/or isoprene and styrene block copolymers, hydrogenated and non-hydrogenated.

The polyolefins which can be used for the purposes of the present invention can be prepared according to any of the methods known in the art.

With respect to the hydroperoxide (or mixture of hydroperoxides) which can be used for the purposes of the present invention, any hydroperoxide can be used, which, at the process temperature, does not undergo a significant decomposition. In other terms, the hydroperoxide preferably has a half-life which is not shorter than the process time, even more preferably not less than 10 times the process time.

Typical examples of hydroperoxides are cumene hydroperoxide, hydrogen peroxide, t-butyl hydroperoxide, 2,5-dihydroperoxy-2,5-dimethyl hexane.

Polar unsaturated monomers which can be used in the process of the present invention are selected from derivatives of unsaturated carboxylic acids such as esters, amides, acids, metallic salts of acrylic acid, fumaric acid, itaconic acid, citraconic acid and maleic acid, maleic anhydride, esters of vinyl alcohol, vinyl silane derivatives, vinyl imidazole derivatives, vinyl oxazole derivatives, vinyl pyridine derivatives.

Maleic anhydride and its derivatives are preferably used.

The hydroperoxide is added to the polymeric material as such or dissolved in a suitable solvent.

The concentration of hydroperoxide with respect to the polyolefins ranges from 0.1 to 20% by weight, preferably from 0.2 to 10% by weight, even more preferably from 0.5% to 5% by weight.

The quantity of monomer used in the present invention generally ranges from 0.1 to 10, preferably from 0.4 to 1.5% with respect to the polyolefins.

The process of the present invention is carried out under high shear conditions, usually higher than 100 sec⁻¹, preferably higher than 1000 sec⁻¹.

The process is carried out at a temperature ranging from 80 to 250°C, preferably from 140 to 200°C for a time ranging from 1 to 1800 seconds, preferably from 30 to 600 seconds.

The above process can be effected in a reactor suitable for the purpose such as, for example, a batch mixer or an extruder.

The process of the present invention is preferably carried out in an extruder, even more preferably in a twinscrew extruder.

The process of the present invention is effected without the introduction of oxygen and can be carried out either batchwise or in continuous. When operating batchwise, the single components are added in a suitable reactor together or in reasonable portions, in the presence or absence of a solvent, preferably without a solvent.

When operating in continuous, the reagents are added continuously, at a suitable feeding rate, to a reactor (or a reactor zone) thermostat-regulated at the desired temperature.

At the end of the above process, if necessary for the subsequent application, antioxidants, light and heat stabilizers, nucleating agents, organic and inorganic dyes or other additives selected from those known in the art, can be added.

The polyolefins modified according to the process of the present invention can be used in various fields, particularly in the production of coating materials and laminates.

The following examples are provided for a better understanding of the present invention.

### EXAMPLES

All the examples were carried out using the same polymer, a commercial EPDM ENICHEM DUTRAL^{R} ter 4033 having 25% by weight of propylene, 4.9% by weight of ethylidene-norbornene (ENB) - MFI (L) = 2.4 g/10 minutes.

The t-butyl hydroperoxide (TBHP) used was supplied by Akzo Nobel at 70% in aqueous solution (trade-name Trigonox^{R} AW70).

The dicumyl peroxide (DCP) was supplied by Elf-Atochem carried at 40% on EPR (trade-name Peroximon^{R} DC40).

Diethyl maleate (DEM) was used as modifying monomer. The chemical modification was determined by means of IR analysis of the product washed in acetone. The presence and intensity of the band at about 1740 cm⁻¹ is evidence of grafting.

An internal quantitative method based on the height of the band was used to avoid interaction with other bands. The value obtained, calculated on the basis of calibrations on ester groups different from the bound DEM, does not exactly correspond to the concentration of grafted DEM, but must be used as a comparison.

### EXAMPLE 1

A 70 cc mixing chamber is charged with 40 g of EPDM polymer DUTRAL^{R} Ter 4033, 1% of t-butyl hydroperoxide and 3.3% of diethyl maleate (DEM), thermostat-regulated at 105°C (external) and kept under mixing at 50 revs/minute. A temperature of 130°C is reached at equilibrium.

The mixture is left to plasticize for 60 seconds, and the rate of the rotors is then suddenly increased to 200 revs/minute; the temperature rises (maximum temperature of the molten product 190°C) and the torque pair measured with the instrument is slowly lowered.

After 2 minutes of mastication, the experiment is interrupted and the product recovered.

The results of the analyses are indicated in Table 1.

### EXAMPLE 2 (comparative)

The mixing chamber of Example 1 is charged with 40 grams of polymer DUTRAL Ter 4033 and 3.3% of DEM, thermostat-regulated at 105°C (external) and kept under mixing at 50 revs/minute. A temperature of 130°C is reached at equilibrium.

The mixture is left to plasticize for 60 seconds, and the rate of the rotors is then suddenly increased to 200 revs/minute; the temperature rises (maximum temperature of the molten product 180°C) and the torque pair measured with the instrument is slowly lowered.

After 2 minutes of mastication, the experiment is interrupted and the product recovered.

The results of the analyses are indicated in Table 1.

### EXAMPLE 3 (comparative)

The mixing chamber of Example 1 is charged with 40 grams of polymer DUTRAL Ter 4033, 0.3% of dicumyl peroxide (DCP) and 3.3% of DEM, thermostat-regulated at 105°C (external) and kept under mixing at 50 revs/minute. A temperature of 130°C is reached at equilibrium.

The mixture is left to plasticize for 60 seconds, and the rate of the rotors is then suddenly increased to 200 revs/minute; the temperature rises (maximum temperature of the molten product 195°C) and the torque pair measured with the instrument is slowly lowered.

After 2 minutes of mastication, the experiment is interrupted and the product recovered.

The results of the analyses are indicated in Table 1.

### EXAMPLE 4 (comparative)

The mixing chamber of Example 1 is charged with 40 grams of polymer DUTRAL Ter 4033, 1% of t-butyl hydroperoxide, at a temperature of about 160°C (external) and kept under mixing at 60 revs/minute. The temperature is then gradually increased to 220°C. After 4 minutes, the product is recovered.

The results of the analyses are indicated in Table 1.

**TABLE 1**

| Example | Solubility in ODCB | Arbitrary grafting unit (IR) |
|---|---|---|
| 1 | complete | 0.70 |
| 2 | complete | 0.03 |
| 3 | insoluble | n.d. (*) |
| 4 | 40% | n.d. |

| | | |
|---|---|---|
| (*) not determined. | | |

From Table 1 it can be seen that the combined use of hydroperoxide and shear conditions (Example 1) produces unexpected advantageous effects with respect to the prior art.

It is possible in fact to use polymers critical for peroxide treatment with hydroperoxide, without observing cross-linking and obtaining grafting reactions with respect to polar monomers such as DEM.

## Claims

1. A process for the functionalisation of polyolefins selected from:
- ethylene/propylene copolymers (EPM) with a molar propylene content ranging from 16% to 50%, and an Mw ranging from 10,000 to 200,000;
- ethylene/propylene/non-conjugated diolefin (EPDM) terpolymers with a molar ethylene content ranging from 40 to 85%, from 15 to 70% of propylene and 2 to 10% molar of non-conjugated diene, the molecular weights Mw of the EPDM being within the range from 75,000 to 450,000;
which comprise the treatment under shear conditions higher than 100 sec⁻¹, with a polar unsaturated monomer selected from maleic anhydride and its derivatives, in the presence of at least one hydroperoxide as radicalic initiator, the concentration of hydroperoxide with respect to the polyolefins ranging from 0.1 to 20% by weight.

2. The process according to claim 1, wherein the shear conditions are higher than 1000 sec⁻¹.

3. The process according to claim 1, wherein the ethylene/propylene (EPM) copolymers have a molar propylene content ranging from 20% to 45%.

4. The process according to claim 1, wherein the ethylene/propylene/non-conjugated diolefin (EPDM) terpolymers have a molar ethylene content ranging from 40 to 70%, from 30 to 60% of propylene and from 0.5 to 20% of non-conjugated diene.

5. The process according to claim 4, wherein the ethylene/propylene/non-conjugated diolefin (EPDM) terpolymers have a molar content of non-conjugated diene ranging from 1 to 15% molar.

6. The process according to claim 5, wherein the ethylene/propylene/non-conjugated diolefin (EPDM) terpolymers have a molar content of non-conjugated diene ranging from 2 to 10% molar.

7. The process according to claim 4, wherein the ethylene/propylene/non-conjugated diolefin (EPDM) terpolymers have a molecular weight Mw ranging from 100,000 to 180,000.

8. The process according to claim 1, wherein the non-conjugated diolefins are selected from 1,4-hexadiene, 1,5-heptadiene, 1,6-octadiene, 1,4-cyclohexadiene, 5-methylene-2-norbornene, 5-ethylidene-2-norbornene.

9. The process according to claim 8, wherein the non-conjugated diolefin is 5-ethylidene-2-norbornene.

10. The process according to claim 1, wherein the hydroperoxide is selected from cumene hydroperoxide, hydrogen peroxide, t-butyl hydroperoxide, 2,5-dihydroperoxy-2,5-dimethyl hexane.

11. The process according to claim 1, wherein the concentration of hydroperoxide with respect to the polyolefins ranges from 0.2 to 10% by weight.

12. The process according to claim 11, wherein the concentration of hydroperoxide with respect to the polyolefins ranges from 0.5% to 5% by weight.

13. The process according to claim 1, wherein the quantity of polar unsaturated monomers ranges from 0.1 to 10% with respect to the polyolefins.

14. The process according to claim 13, wherein the quantity of polar unsaturated monomers ranges from 0.4 to 1.5% with respect to the polyolefins.

15. The process according to claim 1, carried out at a temperature ranging from 80 to 250°C, for a time ranging from 1 to 1800 seconds.

16. The process according to claim 15, wherein the temperature ranges from 140 to 200°C and the time ranges from 30 to 600 seconds.

## Patentansprüche

1. Verfahren zur Funktionalisierung von Polyolefinen, ausgewählt aus:
- Ethylen/Propylencopolymeren (EPM) mit einem molaren Propylengehalt im Bereich von 16% bis 50% und einem Mw im Bereich von 10.000 bis 200.000;
- Ethylen/Propylen/nicht-konjugiertes Diolefin (EPDM)-Terpolymeren mit einem molaren Ethylengehalt im Bereich von 40 bis 85%, von 15 bis 70% Propylen und einem molaren Gehalt an nicht-konjugiertem Dien von 2 bis 10%, wobei die Molekulargewichte Mw von EPDM im Bereich von 75.000 bis 450.000 liegen;
umfassend die Behandlung unter Shear-Bedingungen von mehr als 100 s⁻¹, mit einem polaren ungesättigten Monomeren, ausgewählt aus Maleinsäureanhydrid und dessen Derivaten, in Gegenwart von mindestens einem Hydroperoxid als Radikalinitiator, wobei die Konzentration des Hydroperoxids in Bezug auf die Polyolefine im Bereich von 0,1 bis 20 Gew.-% liegt.

2. Verfahren nach Anspruch 1, wobei die Shear-Bedingungen mehr als 1.000 s⁻¹ betragen.

3. Verfahren nach Anspruch 1, wobei die Ethylen/Propylen (EPM)-Copolymere einen molaren Propylengehalt im Bereich von 20% bis 45% aufweisen.

4. Verfahren nach Anspruch 1, wobei die Ethylen/Propylen/nicht-konjugiertes Diolefin (EPDM)-Terpolymere einen molaren Ethylengehalt im Bereich von 40 bis 70%, von 30 bis 60% an Propylen und von 0,5 bis 20% an nicht-konjugiertem Dien aufweisen.

5. Verfahren nach Anspruch 4, wobei die Ethylen/Propylen/nicht-konjugiertes Diolefin (EPDM)-Terpolymere einen molaren Gehalt an nicht-konjugiertem Dien im Bereich von 1 bis 15 Mol% aufweisen.

6. Verfahren nach Anspruch 5, wobei die Ethylen/Propylen/nicht-konjugiertes Diolefin (EPDM)-Terpolymere einen molaren Gehalt an nicht-konjugiertem Dien im Bereich von 2 bis 10 Mol% aufweisen.

7. Verfahren nach Anspruch 4, wobei die Ethylen/Propylen/nicht-konjugiertes Diolefin (EPDM)-Terpolymere ein Molekulargewicht Mw im Bereich von 100.000 bis 180.000 aufweisen.

8. Verfahren nach Anspruch 1, wobei die nicht-konjugierten Diolefine ausgewählt sind aus 1,4-Hexadien, 1,5-Heptadien, 1,6-Octadien, 1,4-Cyclohexadien, 5-Methylen-2-norbornen und 5-Ethyliden-2-norbornen.

9. Verfahren nach Anspruch 8, wobei das nicht-konjugierte Diolefin 5-Ethyliden-2-norbornen ist.

10. Verfahren nach Anspruch 1, wobei das Hydroperoxid ausgewählt ist aus Cumenhydroperoxid, Wasserstoffperoxid, t-Butylhydroperoxid, 2,5-Dihydroperoxy-2,5-dimethylhexan.

11. Verfahren nach Anspruch 1, wobei die Konzentration an Hydroperoxid in Bezug auf die Polyolefine im Bereich von 0,2 bis 10 Gew.-% liegt.

12. Verfahren nach Anspruch 11, wobei die Konzentration an Hydroperoxid in Bezug auf die Polyolefine im Bereich von 0,5 bis 5 Gew.-% liegt.

13. Verfahren nach Anspruch 1, wobei die Menge an polaren ungesättigten Monomeren im Bereich von 0,1 bis 10% in Bezug auf die Polyolefine liegt.

14. Verfahren nach Anspruch 13, wobei die Menge an polaren ungesättigten Monomeren im Bereich von 0,4 bis 1,5% in Bezug auf die Polyolefine liegt.

15. Verfahren nach Anspruch 1, das bei einer Temperatur im Bereich von 80 bis 250°C für eine Zeitdauer im Bereich von 1 bis 1800 Sekunden ausgeführt wird.

16. Verfahren nach Anspruch 15, wobei die Temperatur im Bereich von 140 bis 200°C und die Zeitdauer im Bereich von 30 bis 600 Sekunden liegt.

## Revendications

1. Procédé pour la fonctionnalisation de polyoléfines choisies parmi :
des copolymères d'éthylène/propylène (EPM) ayant une teneur molaire en propylène de 16 % à 50 %, et un poids moléculaire de 10 000 à 200 000 ;
des terpolymères d'éthylène/propylène/dioléfine non conjuguée (EPDM) ayant une teneur molaire en éthylène de 40 % à 85 %, de 15 à 70 % de propylène et de 2 à 10% en mole de diène non conjugué, le poids moléculaire du EPDM étant de 75 000 à 450 000 ;
comprenant le traitement dans des conditions de cisaillement supérieures à 100 sec⁻¹, avec un monomère polaire insaturé choisi parmi l'anhydride maléique et ses dérivés, en présence d'au moins un hydroperoxyde jouant le rôle d'initiateur de radical, la concentration en hydroperoxyde par rapport aux polyoléfines étant de 0,1 à 20 % en poids.

2. Procédé selon la revendication 1, dans lequel les conditions de cisaillement sont supérieures à 1000 sec⁻¹.

3. Procédé selon la revendication 1, dans lequel les copolymères d'éthylène/propylène (EPM) possèdent une teneur molaire en propylène de 20 % à 45 %.

4. Procédé selon la revendication 1, dans lequel les terpolymères d'éthylène/propylène/dioléfine non conjuguée (EPDM) possèdent une teneur molaire en éthylène de 40 à 70 %, 30 à 60 % de propylène et 0,5 à 20 % de diène non conjugué.

5. Procédé selon la revendication 4, dans lequel les terpolymères d'éthylène/propylène/dioléfine non conjuguée (EPDM) possèdent une teneur molaire en diène non conjugué de 1 à 15 % en mole.

6. Procédé selon la revendication 5, dans lequel les terpolymères d'éthylène/propylène/dioléfine non conjuguée (EPDM) possèdent une teneur molaire en diène non conjugué de 2 à 10 % en mole.

7. Procédé selon la revendication 4, dans lequel les terpolymères d'éthylène/propylène/dioléfine non conjuguée (EPDM) possèdent un poids moléculaire de 100 000 à 180 000.

8. Procédé selon la revendication 1, dans lequel les dioléfines non conjuguées sont choisies parmi le 1,4-hexadiène, le 1,5-heptadiène, le 1,6-octadiène, le 1,4-cyclohexadiène, le 5-méthylène-2-norbornène, le 5-éthylidène-2-norbornène.

9. Procédé selon la revendication 8, dans lequel la dioléfine non conjuguée est le 5-éthylidène-2-norbornène.

10. Procédé selon la revendication 1, dans lequel l'hydroperoxyde est choisi parmi l'hydroperoxyde de cumène, le peroxyde d'hydrogène, l'hydroperoxyde de t-butyle, le 2,5-dihydroperoxy-2,5-diméthyl hexane.

11. Procédé selon la revendication 1, dans lequel la concentration en hydroperoxyde par rapport aux polyoléfines est de 0,2 à 10 % en poids.

12. Procédé selon la revendication 11, dans lequel la concentration en hydroperoxyde par rapport aux polyoléfines est de 0,5 % à 5 % en poids.

13. Procédé selon la revendication 1, dans lequel la quantité de monomères polaires insaturés est de 0,1 à 10 % par rapport aux polyoléfines.

14. Procédé selon la revendication 13, dans lequel la quantité de monomères polaires insaturés est de 0,4 à 1,5 % par rapport aux polyoléfines.

15. Procédé selon la revendication 1, effectué à une température de 80 à 250°C, pendant un temps de 1 à 1800 secondes.

16. Procédé selon la revendication 15, dans lequel la température est de 140 à 200°C et le temps est de 30 à 600 secondes.
